# EUROPÄISCHE PATENTANMELDUNG

(11) **EP 1 031 404 A2**
(43) Veröffentlichungstag der Anmeldung: **30.08.2000**
(21) Anmeldenummer: 00103576.5
(22) Anmeldetag: 19.02.2000
(51) Int. Cl.: B29C 44/18, B29C 49/00, B29C 51/00, B29D 24/00

(54) **Gefüllter Hohlkörper**

(30) Priorität: 26.02.1999 DE 29903505 U
(71) Anmelder: Findlay Industries Deutschland GmbH, 82538 Geretsried (DE)
(72) Erfinder: Zieger, Michael, 82377 Penzberg (DE)
(74) Vertreter: Jönsson, Hans-Peter, Dr.Dipl.-Chem.

(57) **Zusammenfassung**

Gegenstand der Erfindung sind mit duroplastischem Schaumstoff gefüllte Hohlkörper aus thermoplastischem Material für den Automobilbereich sowie ein Verfahren zu ihrer Herstellung.

Das Herstellungsverfahren umfasst:
- a) Erhitzen von wenigstens zwei Tafeln aus Polypropylen, Glasfaserverstärktem Acrylnitril-Butadien-Styrol (ABS), Holzmehl gefülltem Polypropylen mit Naturfaser verstärkt oder Naturfaser-verstärktem Polypropylen mit einer Schichtdicke von jeweils 0,8 bis 3,5 mm auf ihre Plastifizierungstemperatur,
- b) Einsetzen der plastifizierten Tafeln übereinander zwischen Halbformen von denen wenigstens eine mit einer Vielzahl von Hohlräumen versehen ist, die miteinander über ein Netz von Kanälen in Verbindung stehen,
- c) Schließen der Halbformen und Aufbringen einer Druckkraft außerhalb der Hohlräume durch die Tafeln, wobei die Druckkraft durch das mechanische Zusammendrücken der Halbformen erzeugt wird, um die zusammenpassenden Teile der Tafel miteinander zu verbinden und unter Hitze zu verschweißen,
- d) Ausbilden einer Vielzahl von hohlen Bereichen in Übereinstimmung mit den Hohlräumen, in dem zwischen die Tafeln ein Fluid unter einem Druck eingespritzt wird, der ausreicht um zumindestens eine Tafel gegen die Wand der Hohlräume zu drücken, so dass die Tafeln in Übereinstimmung mit den Hohlräumen einer Formkraft unterworfen werden, die mit dem Fluid erzeugt wird,
- e) Einfüllen eines verfestigbaren Fluids in die hohlen Bereiche,
- f) Abkühlen und Aushärten des Hohlkörpers durch eine Berührung mit den Wänden der Halbformen und
- g) Öffnen der Halbformen und entnehmen des Hohlkörpers, wobei die Kanäle auf der Trennfläche der Halbformen angeordnet sind und von den Seitenwänden der Hohlräume verlaufen und das im Schritt e) wenigstens eine Tafel durch den Druck des Fluids gegen die Wände der Kanäle gepresst wird.

## Beschreibung

Gegenstand der Erfindung sind mit duroplastischem Schaumstoff gefüllte Hohlkörper aus thermoplastischem Material für den Automobilbereich und ein Verfahren zu ihrer Herstellung.

Die EP 0 514 616 B1 betrifft ein Verfahren zur Herstellung von Hohlkörpern aus einem thermoplastischen Material, wobei das Verfahren folgende Schritte enthält:
a) Erhitzen von zumindest zwei Tafeln aus einem thermoplastischen Material auf ihre Plastifizierungstemperatur,
b) Einsetzen der plastifizierten Tafeln übereinander zwischen Halbformen von denen zumindest eine mit einer Vielzahl von Hohlräumen versehen ist, die miteinander über ein Netz von Kanälen in Verbindung stehen,
c) Schließen der Halbformen und Aufbringen einer Druckkraft außerhalb der Hohlräume auf die Tafeln, wobei die Druckkraft durch das mechanische Zusammendrücken der Halbformen erzeugt wird, um die zusammenpassenden Teile der Tafeln miteinander zu verbinden und unter Hitze zu verschweißen,
d) Ausbilden einer Vielzahl von hohlen Bereichen in Übereinstimmung mit den Hohlräumen, indem zwischen die Tafeln ein Fluid unter einem Druck eingespritzt wird, der ausreicht, um zumindest eine Tafel gegen die Wand der Hohlräume zu drücken, so dass die Tafeln in Übereinstimmung mit den Hohlräumen einer Formkraft unterworfen werden, die mit dem Fluid erzeugt wird,
e) Abkühlen und Aushärten des Hohlkörpers durch eine Berührung mit den Wänden der Halbformen, und
f) Öffnen der Halbformen und Entnehmen des Hohlkörpers,
   wobei die Kanäle auf der Trennfläche der Halbformen angeordnet sind und von den Seitenwänden der Hohlräume verlaufen, und dass im Schritt d) zumindest eine Tafel durch den Druck des Fluids gegen die Wände der Kanäle gepresst wird.

Demgegenüber besteht die Aufgabe der vorliegenden Erfindung darin, mit duroplastischem Schaumstoff gefüllte Hohlkörper aus thermoplastischem Material für den Automobilbereich zur Verfügung zu stellen, die sich nicht nur durch eine hohe Biegesteifigkeit bei geringem Gewicht, sondern auch durch eine hohe Splitterfreiheit gegenüber herkömmlichen thermoplastischen Hohlkörpern auszeichnet.

Die vorgenannte Aufgabe wird in einer ersten Ausführungsform gelöst durch einen mit duroplastischem Schaumstoffmaterial gefüllten Hohlkörper aus thermoplastischem Material für den Automobilbau, nämlich ein Strukturbauteil mit tragender und schlagzäher Funktionseigenschaft, Kofferraumbelag, Kofferraumboden, Türverkleidung, Hutablage, Laderaumabdeckung, Säulenverkleidung, Rückbankverkleidung, Lehnenabdeckung, Handschuhkastendeckel, Knieschutz oder Instrumententafel, erhältlich durch
- a) Erhitzen von wenigstens zwei Tafeln aus Polypropylen, Glasfaserverstärktem Acrylnitril-Butadien-Styrol (ABS), Holzmehl gefülltem Polypropylen mit Naturfaser verstärkt oder Naturfaser-verstärktem Polypropylen mit einer Schichtdicke von jeweils 0,8 bis 3,5 mm auf ihre Plastifizierungstemperatur,
- b) Einsetzen der plastifizierten Tafeln übereinander zwischen Halbformen von denen wenigstens eine mit einer Vielzahl von Hohlräumen versehen ist, die miteinander über ein Netz von Kanälen in Verbindung stehen,
- c) Schließen der Halbformen und Aufbringen einer Druckkraft außerhalb der Hohlräume durch die Tafeln, wobei die Druckkraft durch das mechanische Zusammendrücken der Halbformen erzeugt wird, um die zusammenpassenden Teile der Tafel miteinander zu verbinden und unter Hitze zu verschweißen,
- d) Ausbilden einer Vielzahl von hohlen Bereichen in Übereinstimmung mit den Hohlräumen, in dem zwischen die Tafeln ein Fluid unter einem Druck eingespritzt wird, der ausreicht, um zumindest eine Tafel gegen die Wand der Hohlräume zu drücken, so dass die Tafeln in Übereinstimmung mit den Hohlräumen einer Formkraft unterworfen werden, die mit dem Fluid erzeugt wird,
- e) Einfüllen eines verfestigbaren Fluids in die hohlen Bereiche,
- f) Abkühlen und Aushärten des Hohlkörpers durch eine Berührung mit den Wänden der Halbformen und
- g) Öffnen der Halbformen und entnehmen des Hohlkörpers, wobei die Kanäle auf der Trennfläche der Halbformen angeordnet sind und von den Seitenwänden der Hohlräume verlaufen und das im Schritt e) wenigstens eine Tafel durch den Druck des Fluids gegen die Wände der Kanäle gepresst wird.

Eine weitere Ausführungsform der Erfindung besteht in dem Verfahren zur Herstellung der genannten Hohlkörper durch
- a) Erhitzen von wenigstens zwei Tafeln aus Polypropylen, Glasfaserverstärktem Acrylnitril-Butadien-Styrol (ABS), Holzmehl gefülltem Polypropylen mit Naturfaser verstärkt oder Naturfaser-verstärktem Polypropylen mit einer Schichtdicke von jeweils 0,8 bis 3,5 mm auf ihre Plastifizierungstemperatur,
- b) Einsetzen der plastifizierten Tafeln übereinander zwischen Halbformen von denen wenigstens eine mit einer Vielzahl von Hohlräumen versehen ist, die miteinander über ein Netz von Kanälen in Verbindung stehen,
- c) Schließen der Halbformen und Aufbringen einer Druckkraft außerhalb der Hohlräume durch die Tafeln, wobei die Druckkraft durch das mechanische Zusammendrücken der Halbformen erzeugt wird, um die zusammenpassenden Teile der Tafel miteinander zu verbinden und unter Hitze zu verschweißen,
- d) Ausbilden einer Vielzahl von hohlen Bereichen in Übereinstimmung mit den Hohlräumen, in dem zwischen die Tafeln ein Fluid unter einem Druck eingespritzt wird, der ausreicht um zumindestens eine Tafel gegen die Wand der Hohlräume zu drücken, so dass die Tafeln in Übereinstimmung mit den Hohlräumen einer Formkraft unterworfen werden, die mit dem Fluid erzeugt wird,
- e) Einfüllen eines verfestigbaren Fluids in die hohlen Bereiche,
- f) Abkühlen und Aushärten des Hohlkörpers durch eine Berührung mit den Wänden der Halbformen und
- g) Öffnen der Halbformen und entnehmen des Hohlkörpers, wobei die Kanäle auf der Trennfläche der Halbformen angeordnet sind und von den Seitenwänden der Hohlräume verlaufen und das im Schritt e) wenigstens eine Tafel durch den Druck des Fluids gegen die Wände der Kanäle gepresst wird.

Mit Hilfe der vorliegenden Erfindung konnte überraschenderweise gefunden werden, dass durch den Ausschäumungsprozess das Endprodukt wärmestabiler als herkömmliche thermoplastische Hohlkörper ist, wenn die Schaummatrix duroplastischen Charakter hat. Desweiteren wird der Thermoplast durch das Ausschäumen und die damit gewonnene Druckfestigkeit splitterfrei. Es wird eine hohe Biegesteifigkeit bei geringem Gewicht erreicht.

Mit Hilfe der vorliegenden Erfindung ist es selbstverständlich auch möglich, Trägermaterialien mit Dekor zu versehen. Der Umbug um 90 ° und der Zuschnitt erfolgt in einem dem Verfahren in der Regel vorgeschalteten Arbeitsgang.

## Patentansprüche

1. Mit duroplastischem Schaumstoffmaterial gefüllter Hohlkörper aus thermoplastischem Material für den Automobilbau, nämlich ein Strukturbauteil mit tragender und schlagzäher Funktionseigenschaft, Kofferraumbelag, Kofferraumboden, Türverkleidung, Hutablage, Laderaumabdeckung, Säulenverkleidung, Rückbankverkleidung, Lehnenabdeckung, Handschuhkastendeckel, Knieschutz oder Instrumententafel, erhältlich durch
- a) Erhitzen von wenigstens zwei Tafeln aus Polypropylen, Glasfaserverstärktem Acrylnitril-Butadien-Styrol (ABS), Holzmehl gefülltem Polypropylen mit Naturfaser verstärkt oder Naturfaser-verstärktem Polypropylen mit einer Schichtdicke von jeweils 0,8 bis 3,5 mm auf ihre Plastifizierungstemperatur,
- b) Einsetzen der plastifizierten Tafeln übereinander zwischen Halbformen von denen wenigstens eine mit einer Vielzahl von Hohlräumen versehen ist, die miteinander über ein Netz von Kanälen in Verbindung stehen,
- c) Schließen der Halbformen und Aufbringen einer Druckkraft außerhalb der Hohlräume durch die Tafeln, wobei die Druckkraft durch das mechanische Zusammendrücken der Halbformen erzeugt wird, um die zusammenpassenden Teile der Tafel miteinander zu verbinden und unter Hitze zu verschweißen,
- d) Ausbilden einer Vielzahl von hohlen Bereichen in Übereinstimmung mit den Hohlräumen, in dem zwischen die Tafeln ein Fluid unter einem Druck eingespritzt wird, der ausreicht um zumindestens eine Tafel gegen die Wand der Hohlräume zu drücken, so dass die Tafeln in Übereinstimmung mit den Hohlräumen einer Formkraft unterworfen werden, die mit dem Fluid erzeugt wird,
- e) Einfüllen eines verfestigbaren Fluids in die hohlen Bereiche,
- f) Abkühlen und Aushärten des Hohlkörpers durch eine Berührung mit den Wänden der Halbformen und
- g) Öffnen der Halbformen und entnehmen des Hohlkörpers, wobei die Kanäle auf der Trennfläche der Halbformen angeordnet sind und von den Seitenwänden der Hohlräume verlaufen und das im Schritt e) wenigstens eine Tafel durch den Druck des Fluids gegen die Wände der Kanäle gepresst wird.

2. Verfahren zur Herstellung eines mit duroplastischem Schaumstoffmaterial gefüllten Hohlkörpers nach Anspruch 1, durch
- a) Erhitzen von wenigstens zwei Tafeln aus Polypropylen, Glasfaserverstärktem Acrylnitril-Butadien-Styrol (ABS), Holzmehl gefülltem Polypropylen mit Naturfaser verstärkt oder Naturfaser-verstärktem Polypropylen mit einer Schichtdicke von jeweils 0,8 bis 3,5 mm auf ihre Plastifizierungstemperatur,
- b) Einsetzen der plastifizierten Tafeln übereinander zwischen Halbformen von denen wenigstens eine mit einer Vielzahl von Hohlräumen versehen ist, die miteinander über ein Netz von Kanälen in Verbindung stehen,
- c) Schließen der Halbformen und Aufbringen einer Druckkraft außerhalb der Hohlräume durch die Tafeln, wobei die Druckkraft durch das mechanische Zusammendrücken der Halbformen erzeugt wird, um die zusammenpassenden Teile der Tafel miteinander zu verbinden und unter Hitze zu verschweißen,
- d) Ausbilden einer Vielzahl von hohlen Bereichen in Übereinstimmung mit den Hohlräumen, in dem zwischen die Tafeln ein Fluid unter einem Druck eingespritzt wird, der ausreicht um zumindestens eine Tafel gegen die Wand der Hohlräume zu drücken, so dass die Tafeln in Übereinstimmung mit den Hohlräumen einer Formkraft unterworfen werden, die mit dem Fluid erzeugt wird,
- e) Einfüllen eines verfestigbaren Fluids in die hohlen Bereiche,
- f) Abkühlen und Aushärten des Hohlkörpers durch eine Berührung mit den Wänden der Halbformen und
- g) Öffnen der Halbformen und entnehmen des Hohlkörpers, wobei die Kanäle auf der Trennfläche der Halbformen angeordnet sind und von den Seitenwänden der Hohlräume verlaufen und das im Schritt e) wenigstens eine Tafel durch den Druck des Fluids gegen die Wände der Kanäle gepresst wird.
